# EUROPÄISCHE PATENTSCHRIFT

(11) **EP 1 948 450 B1**
(45) Veröffentlichungstag und Bekanntmachung des Hinweises auf die Patenterteilung: **09.12.2009**
(21) Anmeldenummer: 06805788.4
(22) Anmeldetag: 20.09.2006
(51) Int. Cl.: B42D 15/10

(54) **VERFAHREN ZUR HERSTELLUNG EINES KARTENFÖRMIGEN DATENTRÄGERS MIT EINEM BESCHRIFTUNGSBEREICH**
METHOD FOR PRODUCING A CARD-TYPE DATA CARRIER COMPRISING AN INSCRIPTION REGION
PROCÉDÉ POUR RÉALISER UN SUPPORT DE DONNÉES SOUS FORME DE CARTE COMPORTANT UNE ZONE D'INSCRIPTION

(30) Priorität: 23.09.2005 DE 102005045567
(43) Veröffentlichungstag der Anmeldung: 30.07.2008
(73) Patentinhaber: Giesecke & Devrient GmbH, 81677 München (DE)
(72) Erfinder: ENDRES, Günter, 81547 München (DE); ANGERER, Johann, 83707 Bad Wiessee (DE); WELLING, Ando, 84424 Isen (DE)
(74) Vertreter: Dendorfer, Claus
(86) Internationale Anmeldenummer: PCT/EP2006/009164
(87) Internationale Veröffentlichungsnummer: WO 2007/036319

(56) Entgegenhaltungen:
- EP-A- 1 547 806
- GB-A- 1 249 900
- GB-A- 2 255 527
- JP-A- 4 344 296
- US-A- 4 325 196

## Beschreibung

Die Erfindung betrifft ein Verfahren zur Herstellung eines kartenförmigen Datenträgers sowie ein Verfahren zur Herstellung eines Halbzeugs für einen kartenförmigen Datenträger. Weiterhin betrifft die Erfindung einen kartenförmigen Datenträger.

Kartenförmige Datenträger werden in den unterschiedlichsten Ausführungsformen für eine Vielzahl von Anwendungen eingesetzt. Dabei weisen die kartenförmigen Datenträger häufig eine Beschriftung, eingearbeitete Sicherheitsmerkmale, einen Magnetstreifen und/oder einen integrierten Schaltkreis auf. Insbesondere können die kartenförmigen Datenträger als Kunststoffkarten mit genormten Abmessungen ausgebildet sein und beispielsweise zur Durchführung von Transaktionen des bargeldlosen Zahlungsverkehrs oder zum Nachweis einer Zugangsberechtigung zu einem Mobilfunknetz usw. eingesetzt werden. Ebenso sind auch kartenförmige Datenträger bekannt, die in der Regel jeweils dünner und großformatiger als die genormten Kunststoffkarten ausgebildet sind und als eine Seite in ein Passbuch integriert sind.

Ein bekanntes Verfahren zur Herstellung von kartenförmigen Datenträgern hoher Qualität stellt die Lamination aus mehreren Kunststofffolien dar. Wenn die kartenförmigen Datenträger besonders kostengünstig hergestellt werden sollen, kommt insbesondere eine Herstellung im Spritzgussverfahren in Betracht.

Mit herkömmlichen Schreibutensilien, wie beispielsweise einem Kugelschreiber, ist es allerdings nicht möglich, die Oberfläche derart hergestellter kartenförmigen Datenträger dauerhaft zu beschriften. Die Tinte des Kugelschreibers oder eine sonstige Beschriftungsflüssigkeit haftet nicht oder nur unzureichend an der Oberfläche des kartenförmigen Datenträgers. Dies hat zur Folge, dass die Beschriftung beim Gebrauch des kartenförmigen Datenträgers verwischt bzw. dass es möglich ist die Beschriftung abzuwischen und durch eine andere Beschriftung zu ersetzen. Beispielsweise bei einer Unterschrift ist es aber erwünscht, dass diese mit gebräuchlichen Schreibutensilien aufgebracht werden kann und dauerhaft erhalten bleibt. Aus diesem Grund werden insbesondere Unterschriftsstreifen aus Papier auf die Oberflächen von kartenförmigen Datenträgern aufgebracht und beispielsweise durch ein Heißklebeverfahren unlösbar mit den Kartenkörpern verbunden. Dies ist allerdings vergleichsweise aufwendig. Weiterhin ist es bereits bekannt, Unterschriftsstreifen drucktechnisch auf die Kartenkörper aufzubringen. Bei derart hergestellten Unterschriftsstreifen ist es allerdings schwierig, eine gute Beschreibbarkeit und Langzeitstabilität zu erreichen.

Aus der US-PS 2,285,806 ist es bekannt, Beschriftungsfelder eines Blatts aus einem faserigen Material, insbesondere eines Scheckformulars, mit einer Vielzahl von Vertiefungen zu versehen, in welche die Tinte beim Beschriften eindringt, um eine Manipulation der Beschriftung zu verhindern. Ein Abwischen der Tinte ist somit kaum möglich. Bei einem mechanischen Radierversuch wird die geschlitzte oder anderweitig durch Vertiefungen unterbrochene Oberfläche des Scheckformulars beschädigt, so dass der Radierversuch nachweisbar ist.

Das Dokument JP 04 344 296 A offenbart ein Verfahren zur Herstellung eines kartenförmigen Datenträgers, wobei in die Oberfläche des Kartenkörpers eine Struktur eingeformt wird und dadurch ein Beschriftungsbereich ausgebildet wird.

Der Erfindung liegt die Aufgabe zugrunde, mit einem geringen Aufwand eine gute Beschreibbarkeit eines aus mehreren Laminierten Kunsstofffolien geformten, kartenförmigen Datenträgers zu gewährleisten.

Diese Aufgabe wird durch ein Verfahren mit der Merkmalskombination des Anspruchs 1 gelöst.

Mit dem erfindungsgemäßen Verfahren wird ein kartenförmiger Datenträger hergestellt, der einen durch Lamination geformten Kartenkörper aus Kunststoff aufweist. Die Besonderheit des erfindungsgemäßen Verfahrens besteht darin, dass in die Oberfläche des Kartenkörpers eine Struktur eines Laminationsbleches während der Lamination eingeformt wird und dadurch ein Beschriftungsbereich ausgebildet wird, der für die Beschriftung mittels einer Beschriftungsflüssigkeit vorgesehen ist und eine durch das Laminationsblech vorgegebene Oberflächenstruktur aufweist.

Die Erfindung hat den Vorteil, dass mit einem vergleichsweise geringen Aufwand eine gute Beschreibbarkeit des Laminierten kartenförmigen Datenträgers erreichbar ist. Eine Beschriftung, die auf den erfindungsgemäß erzeugten Beschriftungsbereich aufgebracht wird, bleibt über einen langen Zeitraum zuverlässig erhalten.

Vor dem Einformen der Struktur des Werkzeugs kann dort, wo der Beschriftungsbereich vorgesehen ist, eine Beschichtung auf den Kartenkörper aufgebracht werden. Damit lässt sich die Beschreibbarkeit weiter verbessern und es können über die Wahl der Beschichtung optische Effekte im Beschriftungsbereich erzielt werden.

Der Kartenkörper wird durch Lamination mehrerer Kunststofffolien hergestellt und zur Ausbildung des Beschriftungsbereichs wird während der Lamination die Struktur eines Laminationsblechs in die Oberfläche des Kartenkörpers eingeformt. Die Ausbildung des Beschriftungsbereichs erfordert somit außer der Verwendung eines speziellen Laminationsblechs keinen zusätzlichen Aufwand.

Vorzugsweise wird im Beschriftungsbereich eine Oberflächenstruktur mit stochastisch verteilten Erhöhungen und/ oder Vertiefungen ausgebildet. Bei einer vorteilhaften Weiterbildung wird im Beschriftungsbereich eine Oberflächenstruktur mit mehreren Strukturkomponenten ausgebildet, die unterschiedlich stark ausgeprägt sind. Dabei können die Strukturkomponenten wenigstens bereichsweise überlappend ausgebildet werden. Insbesondere kann eine erste Strukturkomponente so ausgebildet werden, dass sie eine visuelle Information darstellt. Eine zweite Strukturkomponente kann als eine homogene Verteilung von Erhöhungen und/ oder Vertiefungen ausgebildet werden. Vorzugsweise wird die erste Strukturkomponente stärker ausgeprägt als die zweite Strukturkomponente.

Im Rahmen des erfindungsgemäßen Verfahrens kann weiterhin ein Magnetstreifen auf den Kartenkörper aufgebracht werden und/oder ein Chipmodul in den Kartenkörper eingebaut werden.

Die Erfindung bezieht sich weiterhin auf ein Verfahren zur Herstellung eines Laminierten flachstückartigen Halbzeugs aus Kunststoff für wenigstens einen kartenförmigen Datenträger. In die Oberfläche des Halbzeugs wird während die Lamination an wenigstens einer Stelle eine Struktur eines Laminationsbleches eingeformt und dadurch je ein Beschriftungsbereich ausgebildet, der für die Beschriftung des kartenförmigen Datenträgers mittels einer Beschriftungsflüssigkeit vorgesehen ist und eine durch das Laminationsblech vorgegebene Oberflächenstruktur aufweist.

Der durch das Verfahren hergestellte, Laminierte, kartenförmige Datenträger weist einen Kartenkörper aus Kunststoff auf, auf dessen Oberfläche ein Beschriftungsbereich für die Beschriftung mittels einer Beschriftungsflüssigkeit ausgebildet ist. Der Kartenkörper weist im Beschriftungsbereich eine durch ein Laminationsblech in die Oberfläche des Kartenkörpers eingeformte Oberflächenstruktur auf.

Die Erfindung wird nachstehend anhand der in der Zeichnung dargestellten Ausführungsbeispiele erläutert. Darüber hinaus werden Beispiele gegeben, die nicht Teil des Erfindung sind, aber das Verständis des Erfindung erleichtern sollen.

Es zeigen:
- Fig. 1: ein Ausführungsbeispiel einer durch das Verfahren herstellbaren ausgebildeten Karte,
- Fig. 2: ein erstes Beispiel für die Herstellung einer Karte in einer schematischen Seitenansicht,
- Fig. 3: ein zweites Beispiel für die Herstellung einer Karte in einer schematischen Seitenansicht,
- Fig. 4: ein drittes Beispiel für die Herstellung einer Karte in einer schematischen Seitenansicht,
- Fig. 5: eine erste Variante für die erfindungsgemäße Herstellung der Karte in einer schematischen Seitenansicht und
- Fig. 6: ein viertes Beispiel für die Herstellung einer Karte in einer schematischen Seitenansicht.

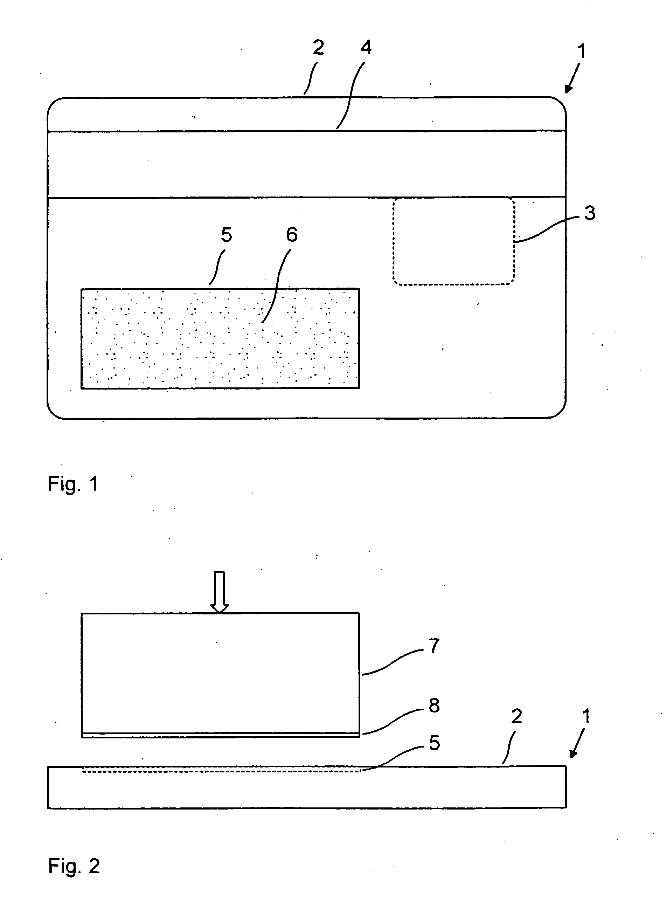

Fig.1 zeigt ein Beispiel einer durch das Verfahren herstellbaren, Laminierten ausgebildeten Karte 1. Die Karte 1 weist einen flachstückartigen Kartenkörper 2 auf, der aus Kunststoff gefertigt ist. Der Kartenkörper 2 ist durch Lamination mehrerer Kunststofffolien hergestellt. Bei der dargestellten Karte 1 ist ein Chipmodul 3 zur Speicherung und/oder Verarbeitung von Informationen in den Kartenkörper 2 eingebettet. Außerdem ist ein Magnetstreifen 4 auf den Kartenkörper 2 aufgebracht. Im Magnetsreifen 4 können ebenfalls Informationen gespeichert werden.

Auf der Oberfläche des Kartenkörpers 2 ist ein Beschriftungsbereich 5 ausgebildet, der für eine Beschriftung mittels einer Beschriftungsflüssigkeit vorgesehen ist. Der Beschriftungsbereich 5 kann beispielsweise mittels eines Kugelschreibers oder eines sonstigen Schreibgeräts beschriftet werden. Innerhalb des Beschriftungsbereichs 5 weist der Kartenkörper 2 eine Oberflächenstruktur 6 auf, durch die eine gute Beschreibbarkeit des Kartenkörpers 2 gewährleistet wird. Die Oberflächenstruktur 6 kann als eine Mattierung mit einer Vielzahl von insbesondere stochastisch verteilten Erhöhungen und/oder Vertiefungen ausgebildet sein. Mit anderen Worten, die Oberfläche des Kartenkörpers 2 weist im Beschriftungsbereich 5 eine Rauhigkeit oder Porigkeit auf, die sie optisch matt erscheinen lässt. Diese Ausbildung der Oberfläche des Kartenkörpers 2 hat zur Folge, dass eine Beschriftungsflüssigkeit, beispielsweise die Tinte eines Kugelschreibers, die im Beschriftungsbereich 5 auf den Kartenkörper 2 aufgebracht wird, fest am Kartenkörper 2 anhaftet. Somit ist eine direkte Beschriftung der Oberfläche des Kartenkörpers 2 möglich, so dass kein Papierstreifen oder sonstiges auf den Kartenkörper 2 aufgebracht werden muss. Abgesehen von dem Mattierungseffekt verändert die Oberflächenstruktur 6 den optischen Eindruck des Kartenkörpers 2 nur geringfügig. Dies bedeutet beispielsweise, dass ein auf den Kartenkörper 2 aufgebrachter Aufdruck auch nach der Ausbildung der Oberflächenstruktur 6 im Beschriftungsbereich 5 weiterhin sichtbar ist.

Fig. 2 zeigt ein erstes Beispiel für die Herstellung einer Karte 1 in einer schematischen Seitenansicht. Bei dieser Variante wird der Beschriftungsbereich 5 erst nach der Herstellung des Kartenkörpers 2 ausgebildet. Dies bedeutet, dass der Kartenkörper 2 zunächst beispielsweise durch Lamination mehrerer Kunststofffolien hergestellt wird und erst danach die Oberflächenstruktur 6 erzeugt wird. Dabei besteht die Möglichkeit, dass die Oberflächenstruktur 6 erst dann erzeugt wird, wenn die Karte 1 im übrigen fertig gestellt ist, d. h. beispielsweise bereits das Chipmodul 3, den Magnetstreifen 4 usw. enthält. Alternativ dazu kann nach der Erzeugung der Oberflächenstruktur 6 noch eine weitere Bearbeitung der Karte 1 erfolgen.

Die Erzeugung der Oberflächenstruktur 6 erfolgt mit Hilfe eines in Fig. 2 symbolisch dargestellten Prägestempels 7. Der Prägestempel 7 weist eine Prägestruktur 8 auf, die komplementär zur Oberflächenstruktur 6 ausgebildet ist, die auf dem Kartenkörper 2 erzeugt werden soll. Die Prägestruktur 8 weist somit eine Vielzahl von Erhöhungen und/ oder Vertiefungen auf, die beispielsweise durch Sand- oder Glasperlenstrahlen oder durch Ätzen des Prägestempels 7 hergestellt werden. Insbesondere können die Erhöhungen und/oder Vertiefungen stochastisch verteilt sein. Der Prägestempel 7 wird dort, wo der Beschriftungsbereich 5 entstehen soll, dem Kartenkörper 2 angenähert, so dass die Prägestruktur 8 an der Oberfläche des Kartenkörpers 2 anliegt. Durch eine weitere Vorschubbewegung wird der Prägestempel 7. gegen den Kartenkörper 2 gepresst und dadurch die Prägestruktur 8 in die Oberfläche des Kartenkörpers 2 eingeprägt. Anschließend wird der Prägestempel 7 wieder vom Kartenkörper 2 entfernt.

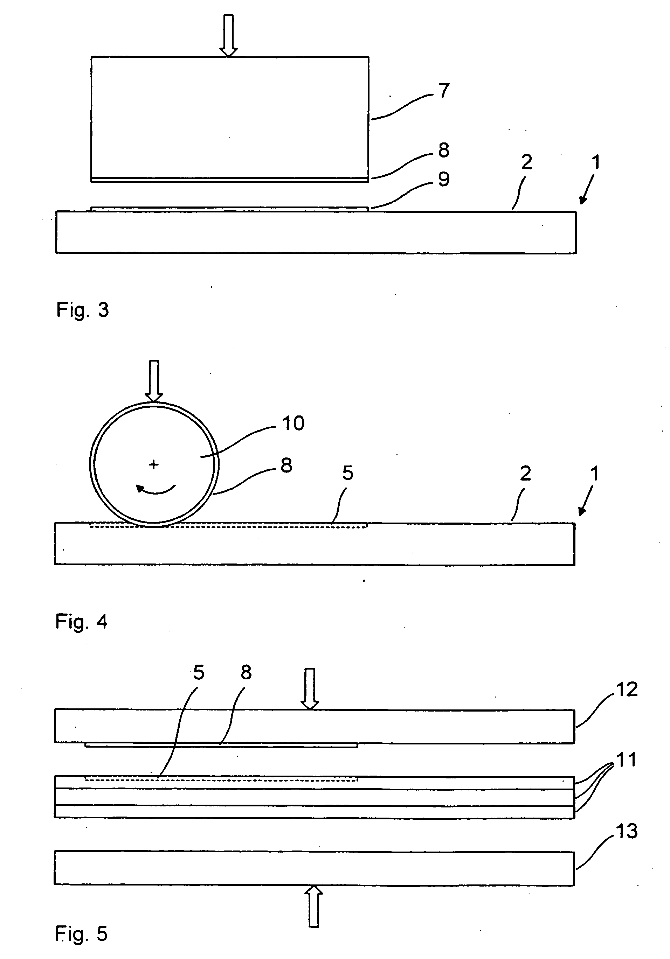

Fig. 3 zeigt ein zweites Beispiel für die Herstellung einer Karte 1 in einer schematischen Seitenansicht. Diese Variante unterscheidet sich von der ersten Variante darin, dass dort, wo der Beschriftungsbereich 5 entstehen soll, vor dem Prägen eine Lackschicht 9 auf die Oberfläche des Kartenkörpers 2 aufgebracht wird. Dann wird die Prägestruktur 8 des Prägestempels 7 in die Lackschicht 9 eingeprägt und dadurch die Oberflächenstruktur 6 des Beschriftungsbereichs 5 erzeugt. Der Prägeprozess wird dabei in analoger Weise durchgeführt, wie für die erste Variante beschrieben. Anstelle der Lackschicht 9 kann beispielsweise auch ein Designdruck oder eine Effektfarbe aufgebracht werden.

Fig. 4 zeigt ein drittes Beispiel für die Herstellung einer Karte 1 in einer schematischen Seitenansicht. Bei der dritten Variante wird ähnlich wie bei der ersten Variante vorgegangen. Allerdings wird anstelle des Prägestempels 7 eine Rolle 10 verwendet, auf deren Mantelfläche die Prägestruktur 8 ausgebildet ist. Zur Erzeugung der Oberflächenstruktur 6 im Beschriftungsbereich 5 des Kartenkörpers 2 wird die Rolle 10 gegen den Kartenkörper 2 gepresst und dabei auf der Oberfläche des Kartenkörpers 2 abgerollt. Dadurch wird die Prägestruktur 8 in die Oberfläche des Kartenkörpers 2 eingeprägt.

Analog zum zweiten Beispiel kann die Prägestruktur 8 der Rolle 10 auch in eine Lackschicht 9 eingeprägt werden, die zuvor auf den Kartenkörper 2 aufgebracht wurde.

Die erfindungsgemäße Herstellung einer Karte 1 mit einem Beschriftungsbereich 5 wird im folgenden erläutert.

Fig. 5 zeigt eine erste Variante für die erfindungsgemäße Herstellung der Karte 1 in einer schematischen Seitenansicht. Anders als bei dem ersten, zweiten und dritten Beispiel wird die Oberflächenstruktur 6 bei der ersten Ausführungsform während der Herstellung des Kartenkörpers 2 erzeugt. Dabei wird der Kartenkörper 2 durch Lamination eines Stapels aus mehreren Kunststofffolien 11 hergestellt. Hierzu werden die Kunststofffolien 11, wie in Fig. 5 dargestellt, zwischen einem oberen Laminierblech 12 und einem unterem Laminierblech 13 angeordnet. Das obere Laminierblech 12 weist auf seiner Innenseite, die den Kunststofffolien 11 zugewandt ist, eine Prägestruktur 8 auf. Die Prägestruktur 8 ist lateral an einer Stelle auf dem oberen Laminierblech 12 ausgebildet, die der vorgesehenen Position des Beschriftungsbereichs 5 auf dem Kartenkörper 2 entspricht.

Zur Durchführung der Lamination wird das obere Laminierblech 12 von oben und das untere Laminierblech 13 von unten gegen den Stapel von Kunststofffolien 11 gepresst und gleichzeitig auf eine für die Lamination vorgesehene Temperatur erwärmt. Durch die Einwirkung von Druck und Hitze verbinden sich die Kunststofffolien 11 untrennbar zum Kartenkörper 2. Dabei wird auch die Prägestruktur 8 des oberen Laminierblechs 12 in die Oberfläche der benachbarten Kunststofffolie 11 eingeformt und dadurch die Oberflächenstruktur 6 des Beschriftungsbereichs 5 ausgebildet. Wenn die Lamination beendet ist, wird der Abstand zwischen den Laminierblechen 12 und 13 vergrößert, so dass der Kartenkörper 2 entnommen werden kann.

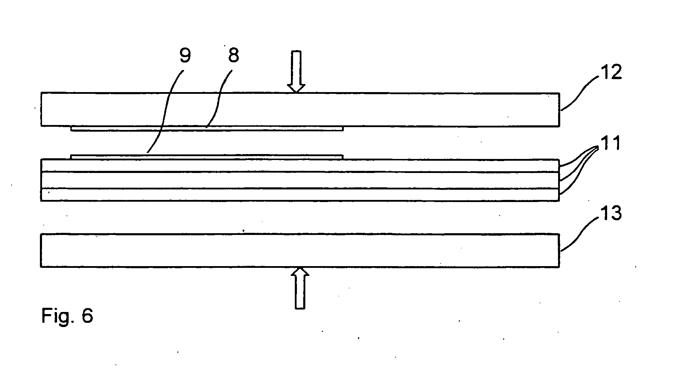

Fig. 6 zeigt ein viertes Beispiel für die Herstellung einer Karte 1 in einer schematischen Seitenansicht. Hier ist auf die Kunststofffolie 11, die einem oberen Laminierblech 12 benachbart ist, in einem Bereich der sich lateral mit der Prägestruktur 8 des oberen Laminierblechs 12 deckt, eine Lackschicht 9 aufgebracht. Anstelle der Lackschicht 9 kann wiederum ebenso ein Designdruck, eine Effektfarbe usw. aufgebracht sein. Bei der Lamination, wird die Prägestruktur 8 des oberen Laminierblechs 12 in die Lackschicht 9 eingeformt.

Analog zu der vorstehend beschriebenen Ausführungsform für die Herstellung der Karte 1, kann mit dem erfindungsgemäßen Verfahren auch nur der Laminierte Kartenkörper 2 hergestellt werden, der dann zu einem späteren Zeitpunkt zu einer fertigen Karte 1 weiterverarbeitet wird. Dabei können gleichermaßen einzelne Kartenkörper 2 oder Bögen mit mehreren Kartenkörpern 2 hergestellt werden. Die vorstehend beschriebene erste Variante der Herstellung von Karten 1 können jeweils ebenfalls ganz oder teilweise mit Bögen durchgeführt werden, die dann zu Karten 1 vereinzelt werden. Dabei sind zum Teil geringfügige Modifikationen der beschriebenen Abläufe erforderlich. Beispielsweise wird für die Lamination eines Bogens ein oberes Laminierblech 12 verwendet, das nicht nur eine, sondern mehrere Prägestrukturen 8 aufweist, damit die Oberflächenstruktur 6 auf jedem Kartenkörper 2 des Bogens erzeugt wird.

Bei allen Varianten können durch die Oberflächenstruktur 6 des Beschriftungsbereichs 5 zusätzliche Effekte erzeugt werden. Beispielsweise kann die Prägestruktur 8 zwei einander überlagerte Strukturkomponenten aufweisen, die unterschiedlich stark ausgeprägt sind. Die unterschiedlich starke Ausprägung der Strukturkomponenten kann darin bestehen, dass die jeweils zugrunde liegenden Erhöhungen bzw. Vertiefungen unterschiedliche laterale Abmessungen und/oder unterschiedliche Abmessungen parallel zur vorgesehenen Prägerichtung aufweisen. Dabei kann eine erste, stark ausgeprägte Strukturkomponente ein Logo, einen Schriftzug usw. repräsentieren und eine zweite, schwach ausgeprägte Strukturkomponente als eine homogene Verteilung von Erhöhungen und/ oder Vertiefungen ausgebildet sein, die sich gleichmäßig über den gesamten Prägebereich erstreckt. Mit einer derart ausgebildeten Prägestruktur 8 wird im Beschriftungsbereich 5 des Kartenkörpers 2 eine Oberflächenstruktur 6 mit einer grobporigen Strukturkomponente in Form des Logos oder Schriftzuges und einer vollflächigen, feinporigen Strukturkomponente erzeugt.

Mit dem erfindungsgemäßen Verfahren können Chipkarten, Magnetstreifenkarten, oder sonstige Arten von Karten 1, insbesondere von Ausweiskarten hergestellt werden, bei denen eine Beschriftung mittels einer Beschriftungsflüssigkeit vorgesehen ist. Insbesondere ist das erfindungsgemäße Verfahren für Karten 1 mit genormten Abmessungen, wie beispielsweise Karten im Format ID1 gemäß der Norm ISO 7810, vorgesehen.

## Patentansprüche

1. Verfahren zur Herstellung eines kartenförmigen Datenträgers(1), der einen Kartenkörper (2) aus Kunststoff aufweist, wobei in die Oberfläche des Kartenkörpers (2) eine Struktur (8) eines Werkzeugs eingeformt wird und **dadurch** ein Beschriftungsbereich (5) ausgebildet wird, der für die Beschriftung mittels einer Beschriftungsflüssigkeit vorgesehen ist und eine durch das Werkzeug vorgegebene Oberflächenstruktur (6) aufweist, **dadurch gekennzeichnet, dass** der Kartenkörper (2) durch Lamination mehrerer Kunststofffolien (11) hergestellt wird und zur Ausbildung des Beschriftungsbereichs (5) während der Lamination die Struktur (8) eines Laminationsblechs (12) in die Oberfläche des Kartenkörpers (2) eingeformt wird.

2. Verfahren nach Anspruch 1, **dadurch gekennzeichnet, dass** im Beschriftungsbereich (5) eine Oberflächenstruktur (6) mit stochastisch verteilten Erhöhungen und/oder Vertiefungen ausgebildet wird.

3. Verfahren nach einem der vorhergehenden Ansprüche, **dadurch gekennzeichnet, dass** im Beschriftungsbereich (5) eine Oberflächenstruktur (6) mit mehreren Strukturkomponenten ausgebildet wird, die unterschiedlich stark ausgeprägt sind.

4. Verfahren nach Anspruch 3, **dadurch gekennzeichnet, dass** die Strukturkomponenten wenigstens bereichsweise überlappend ausgebildet werden.

5. Verfahren nach einem der Ansprüche 3 oder 4, **dadurch gekennzeichnet, dass** eine erste Strukturkomponente so ausgebildet wird, dass sie eine visuelle Information darstellt.

6. Verfahren nach einem der Ansprüche 3 bis 5, **dadurch gekennzeichnet, dass** eine zweite Strukturkomponente als eine homogene Verteilung von Erhöhungen und/ oder Vertiefungen ausgebildet wird.

7. Verfahren nach einem der Ansprüche 3 bis 6, **dadurch gekennzeichnet, dass** die erste Strukturkomponente stärker ausgeprägt wird als die zweite Strukturkomponente.

8. Verfahren nach einem der vorhergehenden Ansprüche, **dadurch gekennzeichnet, dass** ein Magnetstreifen (4) auf den Kartenkörper (2) aufgebracht wird und/oder ein Chipmodul (3) in den Kartenkörper (2) eingebaut wird.

9. Verfahren zur Herstellung eines flachstückartigen Halbzeugs (2) aus Kunststoff für wenigstens einen kartenförmigen Datenträger (1), wobei in die Oberfläche des Halbzeugs (2) an wenigstens einer Stelle eine Struktur (8) eines Werkzeugs eingeformt wird und **dadurch** je ein Beschriftungsbereich (5) ausgebildet wird, der für die Beschriftung des kartenförmigen Datenträgers (1) mittels einer Beschriftungsflüssigkeit vorgesehen ist und eine durch das Werkzeug vorgegebene Oberflächenstruktur (6) aufweist, **dadurch gekennzeichnet, dass** das Halbzeug (2) durch Lamination mehrerer Kunststofffolien (11) hergestellt wird und zur Ausbildung des jeweiligen Beschriftungsbereichs (5) während der Lamination die Struktur (8) eines Laminationsblechs (12) im die Oberfläche des Halbzeugs (2) eingeformt wird.

## Claims

1. Method for producing a card-shaped data carrier (1) comprising a card body (2) of plastic, wherein a structure (8) of a mould is formed into the surface of the card body (2), thereby forming an inscription area (5) which is provided for inscribing it by means of an inscription liquid and comprises a surface structure (6) determined by the mould, **characterised in that** the card body (2) is produced by the lamination of a plurality of plastic foils (11) and the structure (8) of a laminating plate (12) is formed into the surface of the card body (2) during the lamination in order to form the inscription area (5).

2. Method according to claim 1, **characterised in that** a surface structure (6) with stochastically distributed elevations and/or depressions is formed in the inscription area (5).

3. Method according to any one of the preceding claims, **characterised in that** a surface structure (6) with a plurality of structural components developed in varying degrees is formed in the inscription area (5).

4. Method according to claim 3, **characterised in that** the structural components are formed so as to overlap at least in some areas.

5. Method according to any one of the claims 3 or 4, **characterised in that** a first structural component is formed so as to represent a visual information.

6. Method according to any one of the claims 3 to 5, **characterised in that** a second structural component is formed as a homogeneous distribution of elevations and/ or depressions.

7. Method according to any one of the claims 3 to 6, **characterised in that** the first structural component is developed in a more pronounced degree than the second structural component.

8. Method according to any one of the preceding claims, **characterised in that** a magnetic stripe (4) is applied onto the card body (2) and/ or a chip module (3) is built into the card body (2).

9. Method for producing a sheet-like semi-finished product (2) of plastic for at least one card-shaped data carrier (1), wherein a structure (8) of a mould is formed into the surface of the semi-finished product (2) in at least one place, thereby forming one inscription area (5), respectively, which is provided for inscribing the card-shaped data carrier (1) by means of an inscription liquid and comprises a surface structure (6) determined by the mould, **characterised in that** the semi-finished product (2) is produced by the lamination of a plurality of plastic foils (11) and the structure (8) of a laminating plate (12) is formed into the surface of the semi-finished product (2) during the lamination in order to form the respective inscription area (5).

## Revendications

1. Procédé de fabrication d'un support de données sous forme de carte (1) présentant un corps de carte (2) en plastique, sachant qu'une structure (8) d'un outil est moulée dans la surface du corps de carte (2) et qu'une zone d'inscription (5) est ainsi réalisée, qui est prévue pour l'inscription à l'aide d'un liquide d'inscription et présente une structure de surface (6) prédéfinie par l'outil, **caractérisé en ce que** le corps de carte (2) est réalisé par laminage de plusieurs feuilles plastiques (11) et la structure (8) d'une tôle de laminage (12) est moulée dans la surface du corps de carte (2) pour réaliser la zone d'inscription (5) pendant le laminage.

2. Procédé selon la revendication 1, **caractérisé en ce qu'**une structure de surface (6) est réalisée dans la zone d'inscription (5) avec des élévations et/ ou des creux répartis de manière stochastique.

3. Procédé selon l'une quelconque des revendications précédentes, **caractérisé en ce qu'**une structure de surface (6) est réalisée dans la zone d'inscription (5) avec plusieurs composants structurels plus ou moins marqués.

4. Procédé selon la revendication 3, **caractérisé en ce que** les composants structurels sont réalisés de manière à se chevaucher au moins par secteur.

5. Procédé selon l'une quelconque des revendications 3 ou 4, **caractérisé en ce qu'**un premier composant structurel est réalisé de telle sorte qu'il constitue une information visuelle.

6. Procédé selon l'une quelconque des revendications 3 à 5, **caractérisé en ce qu'**un deuxième composant structurel est réalisé sous la forme d'une distribution homogène d'élévations et/ ou de creux.

7. Procédé selon l'une quelconque des revendications 3 à 6, **caractérisé en ce que** le premier composant structurel est plus marqué que le deuxième composant structurel.

8. Procédé selon l'une quelconque des revendications précédentes, **caractérisé en ce qu'**une bande magnétique (4) est appliquée sur le corps de carte (2) et/ ou un module à puce (3) est inséré dans le corps de carte (2).

9. Procédé de fabrication d'un demi-produit (2) de type pièce plate en plastique pour au moins un support de données sous forme de carte (1), sachant qu'une structure (8) d'un outil est moulée dans la surface du demi-produit (2) à au moins un endroit et que respectivement une zone d'inscription (5) est ainsi réalisée, qui est prévue pour l'inscription du support de données sous forme de carte (1) à l'aide d'un liquide d'inscription et présente une structure de surface (6) prédéfinie par l'outil, **caractérisé en ce que** le demi-produit (2) est réalisé par laminage de plusieurs feuilles plastiques (11) et la structure (8) d'une tôle de laminage (12) est moulée dans la surface du demi-produit (2) pour réaliser la zone d'inscription (5) respective pendant le laminage.
